**Europäisches Patentamt**

**European Patent Office**

**Office européen des brevets**

(19)

(11) Veröffentlichungsnummer: **0 303 318 B1**

(12) **EUROPÄISCHE PATENTSCHRIFT**

(45) Veröffentlichungstag der Patentschrift: **29.04.92**

(51) Int. Cl.⁵: **C03B 37/14**, G02B 6/38

(21) Anmeldenummer: **88201664.5**

(22) Anmeldetag: **02.08.88**

(54) **Verfahren zum gleichzeitigen Verschweissen mehrerer Lichtwellenleiterpaare.**

(30) Priorität: **11.08.87 DE 3726607**

(43) Veröffentlichungstag der Anmeldung:
**15.02.89 Patentblatt 89/07**

(45) Bekanntmachung des Hinweises auf die
Patenterteilung:
**29.04.92 Patentblatt 92/18**

(84) Benannte Vertragsstaaten:
**DE FR GB IT**

(56) Entgegenhaltungen:
**EP-A- 0 069 832**
**EP-A- 0 196 137**
**DE-A- 2 932 723**
**DE-B- 2 633 572**
**JP-A- 5 373 148**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**

**NL-5621 BA Eindhoven(NL)**

(84) Benannte Vertragsstaaten:
**FR GB IT**

(72) Erfinder: **Zell, Werner, Dr.**
**Gleiwitzerstrasse 15**
**W-5000 Köln 80(DE)**
Erfinder: **Becker, Johann, Dr.-Ing.**
**Zöllnerstrasse 64**
**W-5063 Overath(DE)**
Erfinder: **Romahn, Ulrich, Dipl.-Ing.**
**Im Hagen 16**
**W-4620 Castrop-Rauxel 4(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

Rank Xerox (UK) Business Services

## Beschreibung

Die Erfindung bezieht sich auf ein Verfahren zum gleichzeitigen Verschweißen mehrerer Lichtwellenleiterpaare durch einen Lichtbogen, welcher zwischen zwei breiten, die einander benachbarten LWL-Paare übergreifenden Schweißelektroden erzeugt wird.

Zum rationellen Verbinden von Lichtwellenleitern (LWL) ist es erforderlich, den Verbindungsvorgang für mehrere Lichtwellenleiterpaare gleichzeitig auszuführen. Das gilt insbesondere, wenn z.B. 10 LWL bereits in Form eines Bandes zusammengefaßt sind.

Bei der Verschweißung der LWL-Paare in einem zwischen unbewegten Elektroden gezündeten Lichtbogen besteht das Problem, alle Stoßstellen auf einer Isothermen des Lichtbogens anzuordnen (EP-B 0069832). Außerdem muß dabei der Elektrodenabstand wesentlich größer sein, als es eigentlich für die Verschweißung von insbesondere Einmoden-LWL optimal wäre.

Alternativ kann der Lichtbogen senkrecht zur Ebene der LWL gerichtet sein, wobei die LWL-Paare dann durch Weiterbewegung der Schweißelektroden nacheinander verschweißt werden. Nach der EP-A-0196137 können dabei auch je zwei LWL-Paare gleichzeitig verschweißt werden. Dieses bekannte Verfahren erfordert aufwendige mechanische Vorrichtungen. Die Gesamt-Schweißzeit ist relativ groß.

Die Anordnung mehrerer Elektrodenpaare (DE-A-29 32 723) ist bei einem Abstand der LWL im Band von beispielsweise nur 250 μm nicht praktikabel, da hierzu die Ableitung der Wärme über die notwendigerweise extrem dünnen Elektroden nicht ausreicht und die Elektroden sofort verbrennen. Eine elektrische Parallelschaltung der Elektroden würde außerdem nur zum Zünden des Lichtbogens zwischen zwei Spitzen führen.

Ein Verfahren der eingangs genannten Art ist durch die Japanische Patentanmeldung KOKAI 53-73148 bekannt. Dort werden zwei LWL-Paare zwischen zwei sich über beide Verbindungsstellen erstreckende schneidenförmige Elektroden gleichzeitig verschweißt. Dabei kann eine gleichmäßige Aufteilung der Schweißenergie auf die Verbindunsstellen nicht zuverlässig gewährleistet werden.

Durch die DE-B2-2 633 572 ist ein Verfahren zum Verschweißen eines einzigen LWL-Paares bekannt, bei welchem ein zwischen zwei schneidenförmigen Elektroden gezündeter Lichtbogen mittels eines Magnetfeldes in der Ebene der Endflächen der LWL bewegt wird. Die Elektroden sind an eine Wechselstromquelle und die Elektromagnete an eine Gleichstromquelle - oder umgekahrt - angeschlossen. Auch Permanentmagnete zur Bildung des Magnetfeldes sind dort beschrieben.

Der Erfindung liegt die Aufgabe zugrunde, das Verfahren der eingangs genannten Art derart zu gestalten, daß bei geringem Zeitaufwand eine gleichmäßig gute Qualität der Schweißverbindungen der einzelnen LWL-Paare erreichbar ist.

Die Lösung gelingt dadurch, daß beim Schweißvorgang durch die Ebene zwischen den Schweißelektroden ein magnetisches Feld in der Weise gebildet wird, daß dadurch der Lichtbogen über die Breite der Schweißelektroden hin und her wandert.

Zwischen länglichen Elektrodenkanten entsteht an sich kein über die gesamte Länge der Elektroden homogener Lichtbogen, vielmehr zündet und brennt der Lichtbogen nur auf einem begrenzten Längenbereich. Durch die Blaswirkung des Magnetfeldes wird erfindungsgemäß erreicht, daß der Lichtbogen an allen Punkten der Breite der länglichen Elektroden bei seiner Hin- und Herbewegung im zeitlichen Mittel eine intensitätsgleiche Energie liefert, so daß alle Verbindungsstellen der nebeneinanderliegenden LWL-Paare mit gleicher Schweißenergie versorgt werden und deshalb alle eine gleich gute Verschweißqualität aufweisen.

Eine besonders große Kraftwirkung auf den Lichtbogen wird dadurch erreicht, daß die magnetischen Feldlinien die Ebene zwischen den Schweißelektroden senkrecht durchdringen.

Es hat sich zur Erzielung einer gleichmäßig guten Verbindungsqualität aller LWL-Paare als vorteilhaft erwiesen, Schweißelektroden zu verwenden, deren Breite gößer ist als die Breite der zu verschweißenden Gruppe von LWL-Paaren. Damit werden die Umkehrbereiche des Lichtbogens, an welchen gegenüber dem mittleren Bereich unterschiedliche Energiedichten entstehen, nicht zur Schweißung benutzt.

Gemäß einer vorteilhaften Ausführungsart ist vorgesehen, daß das magnetische Feld permanentmagnetisch erzeugt wird und daß der Schweißstrom ein Wechselstrom ist.

Eine ebenfalls geeignete Alternativlösung ist dadurch gekennzeichnet, daß der Schweißstrom ein Gleichstrom ist und daß die Richtung des magnetischen Feldes periodisch umgepolt wird.

Ein magnetisches Wechselfeld kann gemäß einer vorteilhaften Ausführungsart zwischen zwei weichmagnetischen Polschuhen erzeugt werden, welche durch ein mit einer Erregerspule bewickeltes Joch verbunden sind.

Wenn die Verbindungsstellen der LWL-Paare eine besonders gleichmäßig gute Qualität aufweisen sollen, kann der zeitliche Kurvenverlauf des Erregerstroms in der Erregerwicklung und/oder des Schweißstroms derart gesteuert werden, daß die den einzelnen LWL-Paaren zugeführte Schweißenergie im wesentlichen gleich ist.

Besonders gute Ergebnisse wurden erzielt, wenn die Periodendauer einer Hin- und Herbewegung des Lichtbogens klein gegen die Schweißdauer ist.

Die Erfindung wird anhand der Beschreibung der Zeichnung näher erläutert.

Fig. 1    zeigt eine Längsansicht auf eine für das erfindungsgemäße Verfahren geeignete Schweißeinrichtung.

Fig. 2    zeigt eine Seitenansicht der Einrichtung nach Fig. 1.

Fig. 3    zeigt den schematischen Aufbau und die Blockschaltung einer für die Erfindung geeigneten Schweißvorrichtung.

In den Figuren sind zehn aus Lichtwellenleitern 1 und 2 bestehende LWL-Paare angedeutet. Die LWL 1 und 2 der LWL-Paare sind jeweils koaxial zueinander ausgerichtet und sollen mit ihren gegenüberliegenden Stirnflächen an den Schweißstellen 3 miteinander verschweißt werden. Dazu sind Schweißelektroden 4 und 5 vorgesehen, welche sich quer über sämtliche Schweißstellen 3 erstrecken und deren Breite größer als die Breite der aus den zehn LWL-Paaren bestehenden LWL Gruppe ist.

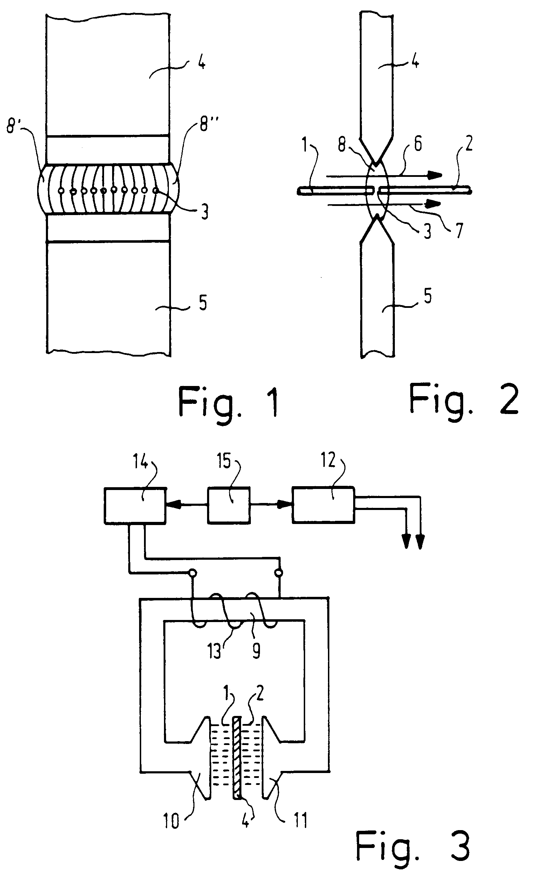

Durch die parallel zu den LWL 1 und 2 durch den Lichtbogenbereich verlaufenden magnetischen Feldlinien 6 und 7 wird eine Kraft in Richtung über die Schweißstellen 3 auf einen zwischen den Schweißelektroden 4 und 5 gezündeten Lichtbogen 8 ausgeübt. Infolgedessen wandert der Lichtbogen 8 beispielsweise vom Bereich 8′ in Fig. 1 zum Bereich 8″. Wird die Richtung der Feldlinien 6 und 7 relativ zur Richtung des Schweißstroms umgekehrt, wandert der Lichtbogen 8 vom Bereich 8″ zurück zum Bereich 8′.

Um ein schnelles Hin- und Herwandern des Lichtbogens 8 über die Schweißstellen 3 zu erreichen, kann im Falle eines z.B. permanentmagnetischen Gleichfeldes für den Schweißstrom ein Wechselstrom geeigneter Frequenz vorgesehen sein.

Eine gleiche Wirkung ergibt sich auch dann, wenn bei einem Schweißgleichstrom ein mittels einer Erregerwicklung gebildetes magnetisches Feld ein Wechselfeld entsprechender Frequenz ist.

Die letztgenannte Lösung kann mit einer schematischen angedeuteten Anordnung nach Fig. 3 verwirklicht werden.

Das magnetische Feld wird zwischen über ein Joch 9 verbundenen und beidseitig der Schweißelektroden 4 und 5 angeordneten Polschuhe 10 und 11 gebildet. Dabei entstehen Feldlinien parallel zu den gestrichelt angedeuteten LWL 1 bzw. 2.

Es ist bereits ausreichend, wenn die Polschuhe 10 und 11 nur oberhalb oder unterhalb der Gruppe der LWL 1 und 2 verlaufen. Besonders wirksam ist es jedoch, wenn sowohl unterhalb als auch oberhalb der LWL jeweils Polschuhe 10 bzw. 11 angeordnet sind, so daß dann wie in Fig. 2 magnetische Feldlinien 6 und 7 auf die gesamte Länge des Lichtbogens 8 einwirken.

Die Schweißelektroden 4 und 5 sind mit einer Gleichstromquelle 12 verbunden, so daß ein Schweiß- Gleichstrom fließt. Die Erregerwicklung 13 ist dagegen an eine Wechselstromquelle 14 angeschlossen, so daß zwischen den Polschuhen 10 und 11 ein magnetisches Wechselfeld entsteht. Die Periodendauer dieses Wechselfeldes ist sehr viel kleiner als die erforderliche Schweißzeit, so daß der gleichzeitige Schweißvorgang aller unterhalb der Schweißelektrode 4 befindlichen Schweißstellen 3 bei einer entsprechenden Vielzahl von Hin- und Herbewegungen des Lichtbogens 8 erfolgt.

Die gleichmäßige Aufteilung der Schweißenergie auf die einzelnen Schweißstellen 3 wird durch die Steuereinheit 15 gesteuert, durch welche insbesondere Frequenz und Kurvenverlauf des Erregerstroms in der Erregerwicklung 13 in geeigneter Weise beeinflußt werden. Zusätzlich kann auch der Verlauf des Schweiß-Gleichstroms mit einem Überlagerungsstrom gesteuert werden, welcher die Frequenz des Magnetfeldes aufweist.

Es ist ebenfalls möglich, sowohl ein magnetisches Wechselfeld als auch einen Schweiß-Wechselstrom vorzusehen, wobei dann deren Frequenzen natürlich verschieden sein müssen. Dabei können die Frequenzen des Schweißstroms und des Erregerstroms erheblich höher sein als die Frequenz der Hin- und Herbewegung des Lichtbogens 8.

**Patentansprüche**

1.    Verfahren zum gleichzeitigen Verschweißen mehrerer Lichtwellenleiterpaare (1,2) durch einen Lichtbogen (8), welcher zwischen zwei breiten, die einander benachbarten LWL-Paare (1,2) übergreifenden Schweißelektroden (4,5) erzeugt wird, dadurch gekennzeichnet, daß beim Schweißvorgang durch die Ebene zwischen den Schweißelektroden (4,5) ein magnetisches Feld (6,7) in der Weise gebildet wird, daß dadurch der Lichtbogen (8) über die Breite der Schweißelektroden (4,5) hin und her wandert.

2.    Verfahren nach Anspruch 1, dadurch gekennzeichnet, daß die magnetischen Feldlinien (6,7) die Ebene zwischen den Schweißelektroden (4,5) senkrecht durchdringen.

3.    Verfahren nach Anspruch 1 oder 2, gekennzeichnet durch die Verwendung von Schweißelektroden (4,5), deren Breite größer ist als die Breite der zu verschweißenden Gruppe von LWL-Paaren (1,2).

4.  Verfahren nach einem der Ansprüche 1 bis 3, dadurch gekennzeichnet, daß das magnetische Feld permanent magnetisch erzeugt wird und daß der Schweißstrom ein Wechselstrom ist.

5.  Verfahren nach einem der Ansprüche 1 bis 3, dadurch gekennzeichnet, daß der Schweißstrom ein Gleichstrom ist und daß die Richtung des magnetischen Feldes periodisch umgepolt wird.

6.  Verfahren nach Anspruch 5, dadurch gekennzeichnet, daß das Wechselfeld zwischen weichmagnetischen Pohlschuhen (10,11) erzeugt wird, welche durch ein mit einer Erregerspule (13) bewickeltes Joch (9) verbunden sind.

7.  Verfahren nach einem der Ansprüche 1 bis 6, dadurch gekennzeichnet, daß der zeitliche Kurvenverlauf des Erregerstroms in der Erregerwicklung (13) und/oder des Schweißstroms derart gesteuert ist, daß die den einzelnen LWL-Paaren (1,2) zugeführte Schweißenergie im wesentlichen gleich ist.

8.  Verfahren nach einem der Ansprüche 1 bis 7, dadurch gekennzeichnet, daß die Periodendauer einer Hin-und Herbewegung des Lichtbogens (8) klein gegen die Schweißdauer ist.

## Claims

1.  A method of simultaneously fusion splicing several pairs of optical waveguides (1,2) by means of an arc (8) generated between two wide welding electrodes (4,5) overlapping the adjacent pairs of optical waveguides (1,2), characterized in that during the splicing operation a magnetic field (6,7) is produced in the plane between the welding electrodes (4,5) in such a manner that the arc (8) travels to and fro over the width of the welding electrodes (4,5).

2.  A method as claimed in Claim 1, characterized in that the magnetic field lines (6,7) pass perpendicularly through the plane defined by the edges of the welding electrodes (4,5).

3.  A method as claimed in Claim 1 or 2, characterized by the use of welding electrodes (4,5) whose width exceeds that of the group of optical waveguide pairs (1,2) to be spliced.

4.  A method as claimed in any one of Claims 1 to 3, characterized in that the magnetic field is permanent and in that the welding current is an alternating current.

5.  A method as claimed in any one of Claims 1 to 3, characterized in that the welding current is a direct current and in that the direction of the magnetic field is periodically reversed.

6.  A method as claimed in Claim 5, characterized in that the alternating field is produced between soft-magnetic pole pieces (10,11) which are interconnected by a yoke (9) onto which an induction coil (13) is wound.

7.  A method as claimed in any one of Claims 1 to 6, characterized in that the variation in time of the induction current in the induction winding (13) and/or of the welding current is controlled so that the welding energy supplied to the individual pairs of optical waveguides (1,2) is substantially equal.

8.  A method as claimed in any one of Claims 1 to 7, characterized in that the period of a reciprocating movement of the arc (8) is of a short duration with respect to the duration of the splicing operation.

## Revendications

1.  Procédé de soudage simultané de plusieurs paires de guides d'ondes optiques (1,2) à l'aide d'un arc électrique (8) créé entre deux larges électrodes de soudage (4, 5) chevauchant des paires de guides d'ondes optiques (1, 2) disposées les unes à côté des autres, caractérisé en ce qu'au cours de l'opération de soudage, un champ magnétique (6, 7) est formé à travers le plan situé entre les électrodes de soudage (4, 5) de telle sorte que l'arc électrique (8) effectue grâce à cela un déplacement de va-et-vient sur toute la largeur des électrodes de soudage (4, 5).

2.  Procédé selon la revendication 1, caractérisé en ce que les lignes du champ magnétique (6, 7) traversent perpendiculairement le plan situé entre les électrodes de soudage (4, 5).

3.  Procédé selon la revendication 1 ou 2, caractérisé en ce qu'on utilise des électrodes de soudage (4, 5) dont la largeur est supérieure à la largeur du groupe de paires de guides d'ondes optiques (1, 2) à souder.

4.  Procédé selon l'une des revendications 1 à 3, caractérisé en ce que le champ magnétique est créé à l'aide d'un aimant permanent et en ce que le courant de soudage est un courant alternatif.

5. Procédé selon l'une des revendications 1 à 3, caractérisé en ce que le courant de soudage est un courant continu et en ce que le sens du champ magnétique est périodiquement inversé.

6. Procédé selon la revendication 5, caractérisé en ce que le champ alternatif est créé entre des sabots polaires (10, 11) faiblement magnétisés, qui sont reliés par une traverse (9) sur laquelle est enroulé un bobinage d'excitation (13).

7. Procédé selon l'une des revendications 1 à 6, caractérisé en ce que l'évolution dans le temps du courant d'excitation dans le bobinage d'excitation (13) et/ou du courant de soudage est commandée de telle sorte que l'énergie de soudage transférée aux paires de guides d'ondes optiques (1, 2) individuelles est en substance constante.

8. Procédé selon l'une des revendications 1 à 7, caractérisé en ce que la durée de la période d'un mouvement de va-et-vient de l'arc électrique (8) est petite par rapport à la durée du soudage.

# Fig. 1

# Fig. 2

# Fig. 3